# EUROPÄISCHE PATENTSCHRIFT

(11) **EP 1 854 665 B1**
(45) Veröffentlichungstag und Bekanntmachung des Hinweises auf die Patenterteilung: **21.10.2009**
(21) Anmeldenummer: 07107888.5
(22) Anmeldetag: 10.05.2007
(51) Int. Cl.: B60Q 1/076, B60Q 1/12

(54) **Scheinwerfer für Fahrzeuge und Montageverfahren**
Headlamp for vehicles and mounting method
Phare pour véhicules et procédé de montage

(30) Priorität: 13.05.2006 DE 102006022403
(43) Veröffentlichungstag der Anmeldung: 14.11.2007
(73) Patentinhaber: Hella KGaA Hueck & Co., 59552 Lippstadt (DE)
(72) Erfinder: Büchner, Arnd-Claus, 59555 Lippstadt (DE); Buschulte, Klaus, 33098 Paderborn (DE); Süsselbeck, Daniel, 59555 Lippstadt (DE)
(74) Vertreter: Downar, Michael

(56) Entgegenhaltungen:
- EP-A- 1 491 400
- EP-A- 1 561 639
- EP-A1- 1 591 313
- DE-A1- 10 131 098
- DE-A1- 10 325 331
- US-A1- 2004 090 780

## Beschreibung

Die Erfindung betrifft einen Scheinwerfer für Fahrzeuge mit einem Reflektor nach dem Oberbegriff des Patentanspruchs 1.

Aus der EP 1 491 400 A2 ist ein Scheinwerfer für Fahrzeuge bekannt, der einen Reflektor und eine im zentralen Bereich des Reflektors angeordnete Lichtquelle umfasst. Der Reflektor ist an einem Tragrahmen um eine vertikale Verschwenkachse drehbar gelagert, so dass der Reflektor zur Erzeugung einer Kurvenlichtfunktion mittels einer ein linear bewegliches Stellelement aufweisenden Stelleinrichtung um die vertikale Verschwenkachse verschwenkbar ist. Dabei greift das linear bewegliche Stellelement in ein an einer Rückwand des Reflektors angeordnetes Verbindungsteil ein. Nachteilig an dem bekannten Scheinwerfer ist, dass er durch die in Richtung einer optischen Achse des Reflektors orientierten Anordnung der Stelleinrichtung eine relativ große Bauraumtiefe benötigt.

Aus der DE 103 39 183 A1 ist ein Scheinwerfer für Fahrzeuge bekannt, der ein nach dem Projektionsprinzip arbeitendes Lichtmodul mit einem gesonderten Lichtmodulträger aufweist, der an einem fest mit dem Gehäuse verbundenen Tragrahmen um eine vertikale Verschwenkachse verschwenkbar gelagert ist. Zwar ist die Stelleinrichtung Bauraum sparend quer zur optischen Achse des Lichtmoduls angeordnet. Durch die doppelte Ausführung eines Tragrahmens ist der Scheinwerfer jedoch relativ montageaufwendig. Insbesondere ist es erforderlich, dass die Stelleinrichtung an einem Gehäuse des Scheinwerfers befestigt werden muss.

Aus der EP 1 561 639 A1 ist ein Scheinwerfer für Fahrzeuge mit einem Reflektor und einer Lichtquelle bekannt, wobei dem Reflektor eine Stelleinrichtung zur Verstellung desselben um eine vertikale Verschwenkachse zugeordnet ist. Die Stelleinrichtung weist einen Stellmotor sowie ein linearbewegliches Stellelement auf, das quer zur optischen Achse des Reflektors beweglich gelagert ist. Das linear bewegliche Stellelement weist an einem freien Ende einen geöffneten Mitnehmer auf, in dem ein mit dem Reflektor verbundenes Verbindungsteil eingreift. Das Verbindungsteil ist Bestandteil eines gesonderten Tragrahmens für den Reflektor.

Aufgabe der vorliegenden Erfindung ist es daher, einen Scheinwerfer für Fahrzeuge derart weiterzubilden, dass mit geringem Montageaufwand eine Bauraum sparende Bereitstellung einer Kurvenlichtfunktion gewährleistet ist.

Zur Lösung dieser Aufgabe weist die Erfindung die Merkmale des Patentanspruchs 1 auf.

Der besondere Vorteil der Erfindung besteht darin, dass der Scheinwerfer montagefreundlich in einer Montagerichtung (aufbauend) montierbar ist, so dass der Montageaufwand wesentlich reduziert werden kann. Zum anderen wird durch die quer eingebaute Stelleinrichtung ein Scheinwerfer mit geringer Bauraumtiefe ermöglicht. Durch die Ausbildung eines in Fahrtrichtung geöffneten Mitnehmers an einem freien Ende eines linear beweglichen Stellelementes der Stelleinrichtung erfolgt ein Ausgleich zwischen der linearen Bewegung des Stellelementes und der kreisförmigen Bewegung eines Verbindungsteils des Reflektors. Der Reflektor wird montagefreundlich in einer einzigen Montagerichtung rastend an einem Tragrahmen des Scheinwerfers montiert, wobei gleichzeitig eine mechanische Verbindung zwischen dem Mitnehmer der Stelleinheit und einem Verbindungsteil des Reflektors hergestellt wird. Das Verbindungsteil des Reflektors ist als ein Zapfen ausgebildet, der einstückig mit einem unteren Lagerelement verbunden ist. Das untere Lagerelement weist zusätzlich eine Gelenkkugel auf, die in Montageposition in eine Lagerschale des Tragrahmens eingreift. Zusätzlich ist ein oberes Lagerelement mit einem Zapfen vorgesehen, das in eine obere Lagerschale eingreift. Dadurch, dass der in den geöffneten Mitnehmer eingreifende Zapfen tonnenförmig ausgebildet ist, kann bei einer Relativbewegung des Zapfens zu dem Mitnehmer die Kontaktfläche gering gehalten und die dabei entstehende Reibkraft minimiert werden. Darüber hinaus ermöglicht die tonnenförmige Geometrie des Zapfens eine Toleranzunempfindlichkeit.

Nach einer besonderen Ausführungsform der Erfindung ist eine Öffnung des in Fahrtrichtung geöffneten Mitnehmers derart orientiert angeordnet, dass ein Normalenvektor der Öffnung parallel zu der optischen Achse des Reflektors verläuft. Vorzugsweise ist in der Öffnung ein Federelement integriert, so dass der Zapfen des Reflektors spielfrei in der Öffnung des in Fahrtrichtung geöffneten Mitnehmers gelagert ist.

Nach einer Weiterbildung der Erfindung sind das obere Lagerelement und das untere Lagerelement durch Verschraubung mit einer Rückwand des Reflektors verbunden. Die zu dem oberen Lagerelement und dem unteren Lagerelement korrespondierende obere Lagerschale bzw. untere Lagerschale sind durch Verrastung in einer Aufnahme des Tragrahmens gehaltert. Auf einfache Weise erfolgt die Montage des Reflektors an dem Tragrahmen, nachdem die Stelleinrichtung in dem einstückig mit dem Tragrahmen verbundenen Halteteil positioniert ist, wobei die Zapfen (Gelenkkugel) des unteren Lageelementes gleichzeitig in die untere Lagerschale bzw. in den in Fahrtrichtung geöffneten Mitnehmer des Stellelementes eingreifen.

Nach einer Weiterbildung der Erfindung kann das untere Lagerelement einen Magneten aufweisen und an dem Tragrahmen eine Sensorplatine mit einem Hallsensor befestigt sein. Auf diese Weise kann Bauraum sparend eine Blockierung des Stellmotors erkannt werden. Vorzugsweise weist die Sensorplatine zusätzlich die für den Betrieb des Stellmotors erforderlichen elektronischen Steuerbauteile auf. Durch die räumliche Zusammenführung der Steuerelektronik einerseits und der Sensorik andererseits auf einer gemeinsamen Platine kann der Bauraumbedarf weiter verringert werden.

Ausführungsbeispiele der Erfindung werden nachfolgend anhand der Zeichnungen näher erläutert.

Es zeigen:
- Figur 1: eine Rückansicht eines montierten Scheinwerfers unter Weglassung eines Gehäuses,

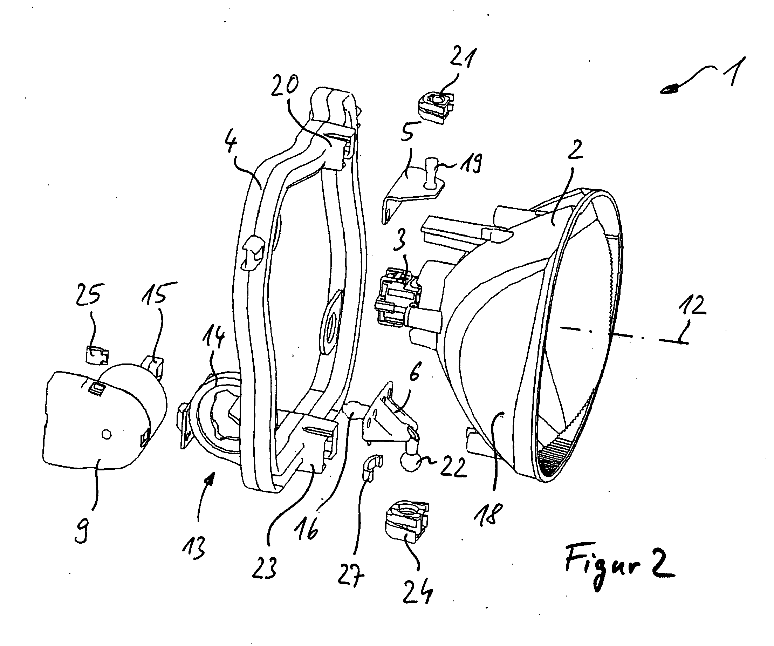

- Figur 2: eine Explosionsdarstellung des erfindungsgemäßen Scheinwerfers unter Weglassung des Gehäuses,
- Figur 3: eine rückseitige Detailansicht eines in Fahrtrichtung geöffneten Mitnehmers des linear beweglichen Stellelementes, wobei in dem Mitnehmer ein Zapfen des Verbindungsteils des Reflektors unter spielfreier Anordnung mittels eines Federelementes eingreift,
- Figur 4: einen Horizontalschnitt durch das untere Lagerelement in der Montageposition desselben,
- Figur 5: eine perspektivische Seitenansicht des unteren Lagerelementes mit einem integrierten Magneten, der mit einem auf einer Sensorplatine angeordneten Hallsensor zusammenwirkt,
- Figur 6: eine Rückansicht des Scheinwerfers in der Montageposition mit einer aufrechten Platine und
- Figur 7: eine rückseitige Darstellung des Scheinwerfers in Montageposition mit einer liegenden Platine.

Ein Scheinwerfer 1 für Fahrzeuge weist im Wesentlichen einen Reflektor 2, eine im zentralen Bereich des Reflektors 2 angeordnete Lichtquelle 3 sowie einen Tragrahmen 4 auf, an dem der Reflektor 2 mittels eines oberen Lagerelementes 5 und mittels eines unteren Lagerelementes 6 drehbar um eine vertikale Verschwenkachse 7 gelagert ist. Zur Verschwenkung des Reflektors 2 um die vertikale Verschwenkachse 7 ist eine Stelleinrichtung 8 vorgesehen, die im Wesentlichen aus einem Stellmotor 9, einer mit elektronischen Bauteilen versehenen Steuerplatine 10 und einem linear beweglichen Stellelement 11 besteht. Hierdurch ist eine Verstellung des Reflektors 2 zur Bildung einer Kurvenlichtfunktion gewährleistet.

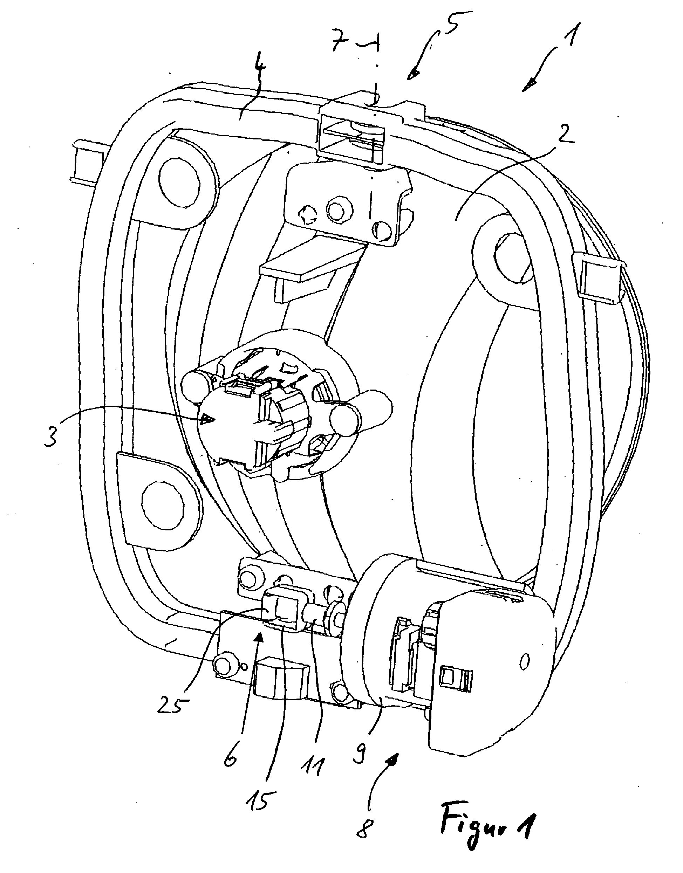

Nach einer Ausführungsform gemäß Figur 1 kann die Steuerplatine 10 in dem Gehäuse des Stellmotors 9 integriert angeordnet sein. Der Stellmotor 9 ist quer zu einer optischen Achse 12 des Reflektors 2, vorzugsweise in horizontaler Richtung, orientiert angeordnet und mittels eines Bajonettverschlusses 13 mit einem von einer Rückseite des Tragrahmens 4 abragenden Halteteil 14 verbunden. Das Halteteil 14 ist vorzugsweise einstückig mit dem Tragrahmen 4 verbunden. Die Stelleinrichtung 8 mit dem Stellmotor 9 ist aus thermischen Gründen in einem unteren Bereich des Scheinwerfers angeordnet.

Nach einer nicht dargestellten alternativen Ausführungsform kann der Stellmotor 9 mittels einer Schraubverbindung an dem Halteteil 14 gehaltert sein.

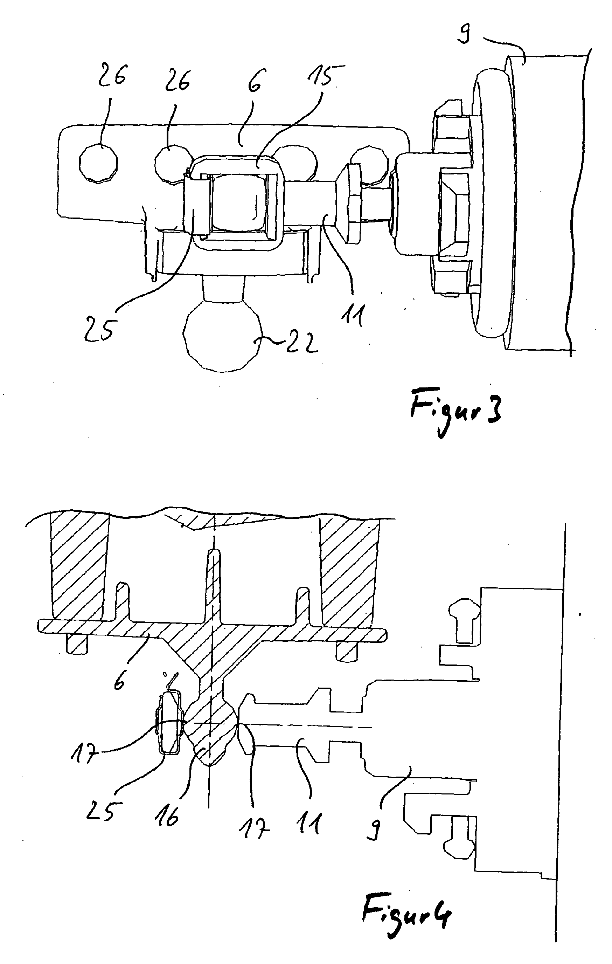

An einem freien Ende des linear beweglichen Stellelementes 11 ist ein in Fahrtrichtung geöffneter Mitnehmer 15 angeordnet, der rechteckförmig ausgebildet ist mit einer Öffnung, deren Normalenvektor parallel zu der optischen Achse 12 verläuft. Vorzugsweise ist der in Fahrtrichtung geöffnete Mitnehmer 15 O-förmig ausgebildet. In der Montagestellung des Scheinwerfers 1 greift in die Öffnung des Mitnehmers 15 ein in horizontaler Richtung abragender Zapfen 16 ein, der von dem unteren Lagerelement 6 abragt. Der Zapfen 16 ist tonnenförmig ausgebildet, wobei er eine relativ geringe Kontaktfläche 17 mit einer Innenseite des rechteckförmigen Mitnehmers 15 bildet, siehe Figur 4.

Das obere Lagerelement 5 und das untere Lagerelement 6 sind mittels Verschraubung in einem oberen Bereich bzw. unteren Bereich mit einer Rückwand 18 des Reflektors 2 verbunden. Ein in vertikaler Richtung nach oben abragender Zapfen 19 des oberen Lagerelementes 5 greift in eine Öffnung einer rastend mit einer Aufnahme 20 des Tragrahmens 4 verbundenen Lagerschale 21 ein. Der Zapfen 19 ist in Vertikalrichtung beweglich in der oberen Lagerschale 21 fixiert.

Das untere Lagerelement 6 weist eine in vertikaler Richtung nach unten abragende Gelenkkugel 22 auf, die um die vertikale Verschwenkachse 7 drehbar in einer rastend in einer unteren Aufnahme 23 des Tragrahmens 4 befestigten unteren Lagerschale 24 gelagert ist.

Zur Montage des Scheinwerfers 1 werden das obere Lagerelement 5 und das untere Lagerelement 6 auf die Rückwand 18 des Reflektors 2 geschraubt. Zum einen wird die obere Lagerschale 21 auf den Zapfen 19 des oberen Lagerelements 5 und zum anderen die untere Lagerschale 24 auf die Gelenkkugel 22 des unteren Lagerelements 6 aufgeschoben. Nun wird der Reflektor 2 in Montagerichtung relativ zu dem Tragrahmen 4 hinbewegt. Dabei werden die obere Lagerschale 21 und die untere Lagerschale 24 gemeinsam in die Aufnahmen 20 bzw. 23 des Tragrahmens 4 eingeschoben bzw. jeweils mit denselben verrastet. Ferner greift der Zapfen 16 des unteren Lagerelementes 6 in den Mitnehmer 15 des Stellelementes 11 ein.

Darüber hinaus wird optional ein Federelement 25 durch Verrastung mit dem in Fahrtrichtung geöffneten Stellelement 11 verbunden, so dass der Zapfen 16 nach seinem Eingreifen in den Mitnehmer 15 spielfrei gehaltert ist. Das Stellelement 11 wird mittels des Bajonettverschlusses 13 an dem Tragrahmen 4 befestigt.

Dadurch, dass die Öffnung des Mitnehmers 15 parallel zur optischen Achse und senkrecht zu dem Stellelement 11 verläuft, wobei der Zapfen 16 des Lagerelementes 6 in der Öffnung gleitend geführt ist, wird ein Ausgleich zwischen Längs- und Schwenkbewegung ermöglicht.

Das obere Lagerelement 5 und das untere Lagerelement 6 weisen Bohrungen 26 auf, durch die nicht dargestellte Schrauben zur Verbindung mit dem Reflektor 2 einschraubbar sind.

Nach einer nicht dargestellten Ausführungsform der Erfindung können das obere Lagerelement 5 und das untere Lagerelement 6 rastend oder einstückig mit der Rückwand 18 des Reflektors 2 verbunden sein. Die obere Lagerschale 21 und die untere Lagerschale 24 können alternativ auch durch Schraubverbindung oder einstückig mit dem Tragrahmen 4 verbunden sein.

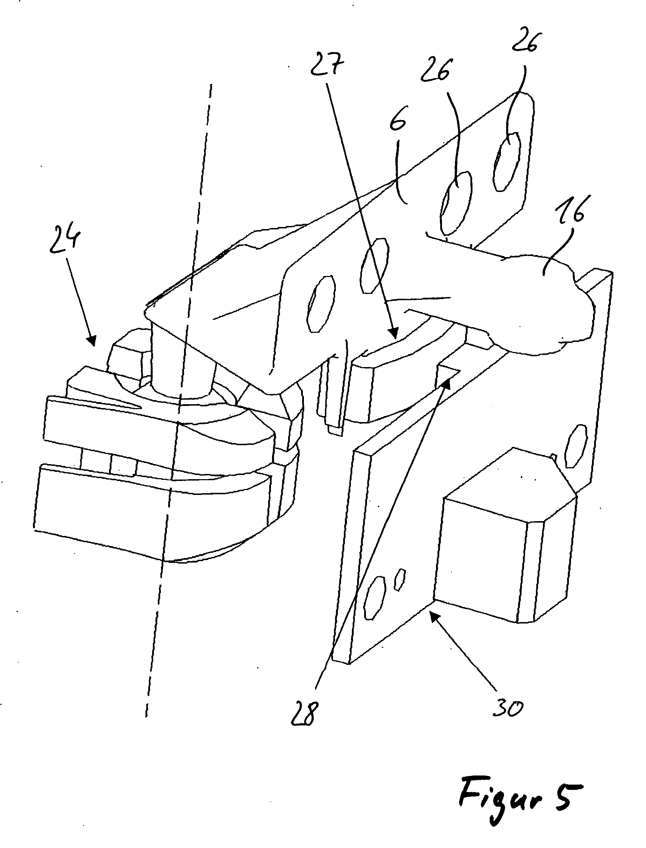

Nach einer Ausführungsform der Erfindung gemäß Figur 5 kann an einer Unterseite des unteren Lagerelementes 6 eine Sensorikeinrichtung 30 mit einem Magneten 27 und einem Hallsensor 28 befestigbar sein, wobei der Magnet 27 mit dem Hallsensor 28 zusammenwirkt zur Erkennung von Blockaden der elektrischen Stelleinrichtung 8.

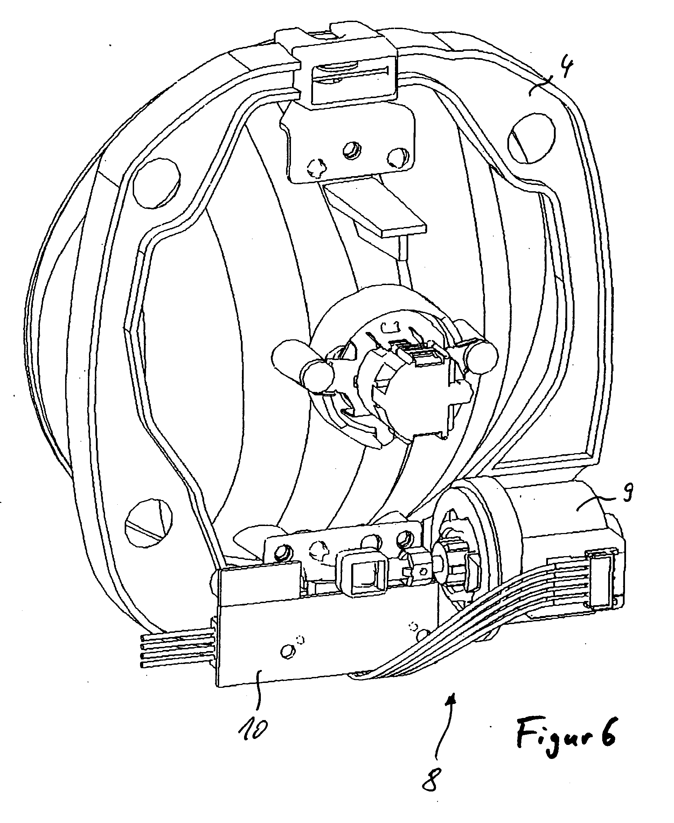

Der Hallsensor 28 kann auf der aufrecht angeordneten Steuerplatine 10 angebracht, siehe Figur 6. Die Steuerplatine 10 weist zum einen die Sensorikeinrichtung 30 für die elektronische Blockiererkennung und zum anderen die elektronischen Steuerbauteile für den Stellmotor 9 auf. Dadurch, dass eine Steuerelektronikplatine und eine Sensorikplatine in der Steuerplatine 10 zusammengefasst sind, ergibt sich eine Kosten sparende Vereinheitlichung, die zudem den Montageaufwand reduziert. Die Vereinheitlichung ermöglicht eine verbesserte Variabilität bei der Bestückung der Platinen mit Bauteilen. Es können verschiedene Ansteuerungen in der Stelleinrichtung 8 integriert werden.

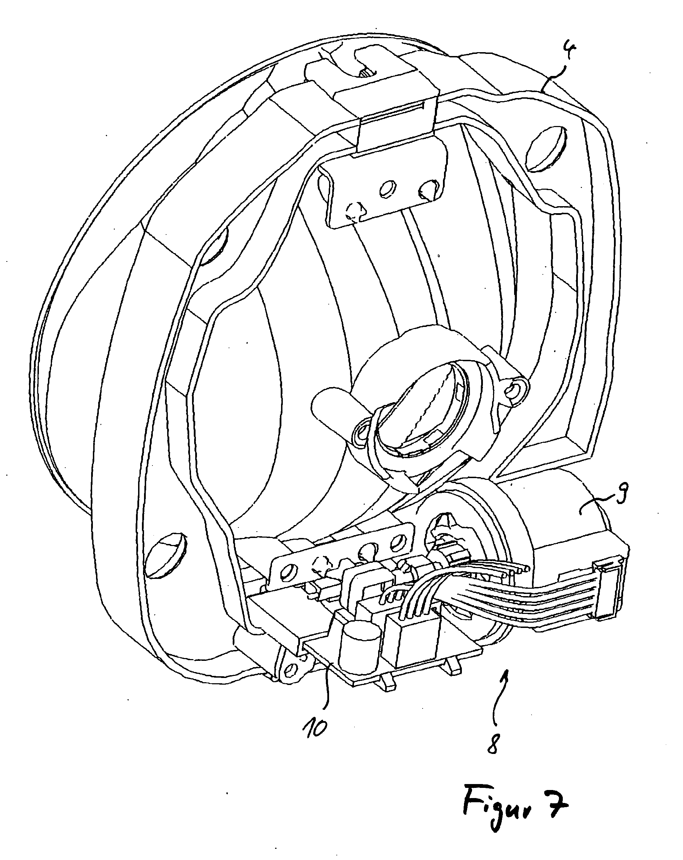

Nach einer alternativen Ausführungsform gemäß Figur 7 kann die Steuerplatine 10 auch liegend, das heißt in horizontaler Richtung verlaufend, angeordnet sein. Die Anordnung der Steuerplatine 10 ist abhängig von dem vorhandenen Bauraum des Fahrzeugs.

Nach einer nicht dargestellten Ausführungsform kann statt einer Magnet/Hallsensorkombination auch ein Mikroschalter mit entsprechender Schaltnocke oder eine Lichtschranke zur Blockadeerkennung eingesetzt werden.

Vorteilhaft ermöglicht die Erfindung die Verwendung einer Vielzahl von Gleichteilen sowohl für einen rechts der vertikalen Fahrzeugmittelebene als auch links derselben angeordnete Scheinwerfer 1. Der mit dem Tragrahmen 4 verbundene Reflektor 2 ist als Schwenkmodul vor Einbau in das Scheinwerfergehäuse als Einzelkomponente prüfbar.

Nach einer alternativen Ausführungsform kann an den Tragrahmen 4 ein weiterer Reflektor, vorzugsweise ein Fernlichtreflektor, angeformt sein. Dieser ist nicht schwenkbar ausgeführt. Alternativ kann der Fernlichtreflektor auch justierbar zu dem Tragrahmen 4 angeordnet sein.

Alternativ kann der Fernlichtreflektor auch über eine Koppelmechanik mit dem Reflektor 2 verbunden sein, so dass er mitschwenkbar ausgeführt ist.

Nach einer nicht dargestellten Ausführungsform kann der Mitnehmer 15 auch kugelförmig unter Verwendung eines Koppelstückes mit kugelförmigem Zapfen ausgebildet sein. Zwischen dem Zapfen des Mitnehmers und dem Verbindungsteil 16 des Reflektors kann ein Koppelstück angeordnet sein, derart, dass ein Ausgleich der Relativbewegung zwischen dem Mitnehmer und dem Verbindungsteil 16 gegeben ist.

Alternativ kann die Verbindung zwischen dem Stellelement 11 und dem Verbindungsteil 16 auch durch ein Filmscharnier erfolgen.

Alternativ kann der Stellmotor 9 drehbar um eine vertikale Achse gelagert sein. Der Mitnehmer des Stellelementes hat hierbei eine gelenkige Verbindung mit dem Verbindungsteil 16 des Reflektors.

Alternativ kann die Verbindung des Stellelementes 11 mit dem Verbindungsteil 16 des Reflektors 2 auch mittels eines Schneckengetriebes mit Ritzel oder mittels eines Drahtseils mit umgebender Druckfeder oder mittels eines flexiblen Blechteils erfolgen.

## Patentansprüche

1. Scheinwerfer für Fahrzeuge mit einem Reflektor (2), mit einer im zentralen Bereich des Reflektors (2) angeordneten Lichtquelle (3), mit einer Stelleinrichtung (8) zur Verstellung des Reflektors (2) um eine vertikale Verschwenkachse (7) enthaltend einen Stellmotor (9) und ein linear bewegliches Stellelement (11), das mit einem rückseitig des Reflektors (2) abragenden Verbindungsteil (16) desselben in Eingriff steht, mit einem Tragrahmen (4), an dem der Reflektor (2) gelenkig gelagert ist und der über ein Halteteil (14) verfügt zur Aufnahme der Stelleinrichtung (8), wobei die Stelleinrichtung (8) quer zur optischen Achse (12) des Reflektors (2) angeordnet ist, und dass das linear bewegliche Stellelement (11) an einem freien Ende desselben einen in Fahrtrichtung geöffneten Mitnehmer (15) aufweist, in dem das Verbindungsteil (16) des Reflektors (2) gelagert ist, **dadurch gekennzeichnet, dass** das Verbindungsteil (16) als ein tonnenförmiger Zapfen ausgebildet ist, der einstückig mit einem unteren Lagerelement (6) verbunden ist, das über eine Gelenkkugel (22) verfügt, die in einer unteren Lagerschale (24) des Tragrahmens (4) gelagert ist, und dass das untere Lagerelement (6) in einem unteren Bereich einer Rückwand (18) des Reflektors (2) befestigbar ist, dass ein oberes Lagerelement (5) in einem oberen Bereich der Rückwand (18) des Reflektors (2) befestigbar ist und einen Zapfen (19) aufweist, der um die vertikale Verschwenkachse (7) verdrehbar und in vertikaler Richtung beweglich in einer oberen Lagerschale (21) gelagert ist.

2. Scheinwerfer nach Anspruch 1, **dadurch gekennzeichnet, dass** der in Fahrtrichtung geöffnete Mitnehmer (15) eine Öffnung zur Aufnahme des Zapfens (16) aufweist, wobei ein Normalenvektor der Öffnung parallel zur optischen Achse (12) verläuft.

3. Scheinwerfer nach Anspruch 1 oder 2, **dadurch gekennzeichnet, dass** die Öffnung des Mitnehmers (15) senkrecht zu dem Stellelement (11) ausgerichtet ist.

4. Scheinwerfer nach einem der Ansprüche 1 bis 3, **dadurch gekennzeichnet, dass** die obere Lagerschale (5) und/oder die untere Lagerschale (6) in einer oberen Aufnahme (20) bzw. in einer unteren Aufnahme (23) des Tragrahmens (4) eingeklipst sind.

5. Scheinwerfer nach einem der Ansprüche 1 bis 4, **dadurch gekennzeichnet, dass** der Stellmotor (9) mittels eines Bajonettverschlusses (13) an dem Halteteil (14) des Tragrahmens (4) befestigt ist.

6. Scheinwerfer nach einem der Ansprüche 1 bis 5, **dadurch gekennzeichnet, dass** dem in Fahrtrichtung geöffneten Mitnehmer (15) ein Federelement (25) zugeordnet ist, derart, dass der Zapfen (16) ohne Spiel in dem in Fahrtrichtung geöffneten Mitnehmer (15) gelagert ist.

7. Scheinwerfer nach einem der Ansprüche 1 bis 6, **dadurch gekennzeichnet, dass** an dem unteren Lagerelement (6) ein Magnet (27) und an dem Tragrahmen (4) eine Steuerplatine (10) enthaltend einen Sensorik (28) befestigt ist zur Erkennung einer Blockierung des Stellmotors (9).

8. Scheinwerfer nach einem der Ansprüche 1 bis 7, **dadurch gekennzeichnet, dass** die Steuerplatine (10) zum einen Bauelemente einer Sensorikeinichtung (30) für die elektronische Blockiererkennung und zum anderen elektronische Bauteile zur Steuerung des Stellmotors (9) aufweist.

9. Scheinwerfer nach einem der Ansprüche 1 bis 8, **dadurch gekennzeichnet, dass** an dem Tragrahmen (4) ein zusätzlicher Reflektor angeformt ist.

10. Scheinwerfer nach einem der Ansprüche 1 bis 11, **dadurch gekennzeichnet, dass** ein zusätzlicher Reflektor über eine mechanische Kopplung mit dem Reflektor (2) derart verbunden ist, dass der zusätzliche Reflektor zusammen mit dem Reflektor (2) gleichmäßig schwenkbar ist.

## Claims

1. Headlamp for vehicles comprising a reflector (2), a light source (3) located in the central area of the reflector (2), an adjustment device (8) for setting the reflector (2) to a point on a vertical swiveling axis (7), containing a servo drive (9) and an actuator element (11) able to move in linear direction and hooked into a connecting element (16) of and protruding from the back of the reflector (2), further comprising a carrier frame (4) that the reflector (2) is joined to in an articulated manner and that has a holding element (14) for holding the adjustment device (8), wherein the adjustment device (8) is installed across the optical axis (12) of the reflector (2) and the actuator element (11) able to move in linear direction has a dog (15) at one of its free ends such that the dog (15) is open in the traveling direction and holds the connecting element (16) of the reflector (2), **characterized in that** the connecting element (16) is a barrel-shaped stud forming an integral unit with a lower bearing element (6) which has a joint ball (22) resting in a bottom bearing shell (24) of the carrier frame (4) and also **characterized in that** the bottom bearing element (6) can be attached to a bottom part of the reflector's (2) rear wall (18) and that an upper bearing element (5) can be attached to a top area of the reflector's (2) rear wall (18) and has a stud (19) turnable around the vertical swiveling axis (7) and resting in an upper bearing shell (21) such that it can move in vertical direction.

2. Headlamp of claim 1, **characterized in that** the dog (15) open in traveling direction has an opening that the stud (16) fits into, wherein a normal vector of the opening is parallel to the optical axis (12).

3. Headlamp of claim 1 or 2, **characterized in that** the opening of the dog (15) is perpendicular to the actuator element (11).

4. Headlamp of claims 1 to 3, **characterized in that** the top bearing shell (5) and/or the bottom bearing shell (6) is clipped into a top seat (20) or into a bottom seat (23) of the carrier frame (4).

5. Headlamp of claims 1 to 4, **characterized in that** the servo drive (9) is attached to the holding element (14) of the carrier frame (4) by means of a bayonet mount (13).

6. Headlamp of claims 1 to 5, **characterized in that** a spring element (25) is allocated to the dog (15) open in traveling direction such that the stud (16), without play, rests in the dog (15) open in traveling direction.

7. Headlamp of claims 1 to 6, **characterized in that** a magnet (27) is mounted to the bottom bearing element (6) and that a control board (10) comprising a sensor circuitry (28) is mounted to the carrier frame (4) able to detect whether the servo drive (9) is blocked.

8. Headlamp of claims 1 to 7, **characterized in that** the control board (10) is populated with components of a sensor circuitry installation (30) for electronic blocking detection and also with electronic components for controlling the servo drive (9).

9. Headlamp of claims 1 to 8, **characterized in that** an additional reflector is molded to the carrier frame (4).

10. Headlamp of claims 1 to 11, **characterized in that** an additional reflector is mounted to the reflector (2) by a mechanical link such that the additional reflector smoothly swivels together with the reflector (2).

## Revendications

1. Projecteur pour véhicules avec un réflecteur (2), avec une source d'éclairage (3) disposée dans la zone centrale du réflecteur (2), avec un dispositif de réglage (8) destiné au réglage du réflecteur (2) autour d'un axe de pivotement vertical (7) comprenant un moteur de réglage (9) et un élément de réglage (11) à déplacement linéaire, ce dernier étant en prise avec un élément de liaison (16) en saillie au dos du réflecteur (2) de celui-ci, avec un cadre porteur (4) logé de manière articulée sur le réflecteur (2) et qui dispose d'un élément d'arrêt (14) pour le logement du dispositif de réglage (8), le dispositif de réglage (8) étant disposé perpendiculairement à l'axe optique (12) du réflecteur (2) et l'élément de réglage (11) à déplacement linéaire présentant en l'une de ses extrémités libres un entraîneur (15) ouvert dans le sens de la marche, dans lequel est logé l'élément de liaison (16) du réflecteur (2), **caractérisé en ce que** l'élément de liaison (16) se présente sous la forme d'un tenon en forme de tonneau relié d'un seul tenant avec un élément inférieur de palier (6) qui dispose d'une sphère articulée (22), laquelle est logée dans une coque de palier (24) inférieure du cadre porteur (4) et que l'élément de palier inférieur (6) peut être fixé dans une section inférieure d'une paroi arrière (18) du réflecteur (2), qu'un élément de palier supérieur (5) peut être fixé dans une section supérieure de la paroi arrière (18) du réflecteur (2) et présente un tenon (19) qui peut pivoter autour de l'axe de pivotement vertical (7) et qui est logé dans le sens vertical de manière mobile dans une coque de palier supérieure (21).

2. Projecteur selon la revendication 1, **caractérisé en ce que** l'entraîneur (15) ouvert dans le sens de la marche présente une ouverture pour le logement du tenon (16), un vecteur normal de l'ouverture étant parallèle à l'axe optique (12).

3. Projecteur selon la revendication 1 ou 2, **caractérisé en ce que** l'ouverture de l'entraîneur (15) est orientée perpendiculairement à l'élément de réglage (11).

4. Projecteur selon l'une des revendications 1 à 3, **caractérisé en ce que** la coque de palier supérieure (5) et/ou la coque de palier inférieure (6) sont clipsées dans un logement supérieur (20) ou dans un logement inférieur (23) du cadre porteur (4).

5. Projecteur selon l'une des revendications 1 à 4, **caractérisé en ce que** le moteur de réglage (9) est fixé à l'aide d'une fermeture à baïonnette (13) sur l'élément d'arrêt (14) du cadre porteur (4).

6. Projecteur selon l'une des revendications 1 à 5, **caractérisé en ce qu'**un élément ressort (25) est affecté à l'entraîneur (15) ouvert dans le sens de la marche de manière telle que le tenon (16) soit logé sans jeu dans l'entraîneur (15) ouvert dans le sens de la marche.

7. Projecteur selon l'une des revendications 1 à 6, **caractérisé en ce que**, sur l'élément de palier inférieur (6), un aimant (27) et sur le cadre porteur (4) une platine de commande (10) contenant une sensorique (28) sont fixés pour détecter un blocage du moteur de réglage (9).

8. Projecteur selon l'une des revendications 1 à 7, **caractérisé en ce que** la platine de commande (10) présente d'une part des éléments d'un dispositif sensorique (30) pour la détection électronique d'un blocage et, d'autre part, des composants électroniques pour la commande du moteur de réglage (9).

9. Projecteur selon l'une des revendications 1 à 8, **caractérisé en ce qu'**un réflecteur supplémentaire est formé sur le cadre porteur (4).

10. Projecteur selon l'une des revendications 1 à 11, **caractérisé en ce qu'**un réflecteur supplémentaire est relié par un couplage mécanique au réflecteur (2) de manière que le réflecteur supplémentaire puisse être orienté régulièrement avec le réflecteur (2).
